# EUROPEAN PATENT APPLICATION

(11) **EP 2 081 131 A1**
(43) Date of publication of application: **22.07.2009**
(21) Application number: 09000371.6
(22) Date of filing: 13.01.2009
(51) Int. Cl.: G06K 9/00, G06K 9/64, B60R 21/34, B60T 7/22, G06T 7/00, G08G 1/16, B60W 30/08, B60W 50/08

(54) **Object detector**

(30) Priority: 18.01.2008 JP 2008008616
(71) Applicant: Hitachi Ltd., Chiyoda-ku Tokyo 100-8280 (JP)
(72) Inventor: Otsuka, Yuji, Tokyo 100-8220 (JP); Muramatsu, Shoji, Tokyo 100-8220 (JP); Monji, Tatsuhiko, Tokyo 100-8220 (JP)
(74) Representative: Beetz & Partner

(57) **Abstract**

A detector includes an image pickup unit (101) mounted on a vehicle (102) to obtain an image of an object; and a detecting unit (303) for detecting an object (204) in an object detecting area (104) at a predetermined distance from the image pickup unit (101). The image pickup unit (101) may include a monocular camera, and the predetermined distance may be fixed or may be varied according to the running speed of the vehicle (102). The detecting unit (303) may detect objects (204) respectively in plural object detection areas (104) respectively at different distances from the image pickup unit (101).

## Description

### BACKGROUND OF THE INVENTION

The present invention relates to a detector for extracting an object from an input image.

There has been proposed a method of detecting an object, such as a pedestrian, coming into the running course of a vehicle with an on-board sensor. Generally, a scanning radar, such as a laser radar or a millimeter-wave radar, is used for detecting objects existing ahead of the vehicle, such as preceding vehicles and pedestrians. A first known technique uses, in combination, an image sensor, such as a monocular camera or a stereoscopic camera, and a radar and performs sensor fusion, for example, to decide whether or not a detected object is a pedestrian . See, for example, JP-A-2006-284293. A second known technique calculates a distance on the basis of a parallax between images of an object taken by a stereoscopic camera and decides whether or not the object is a pedestrian. See, for example, JP-A-2005-228127. A third known technique detects a solid object by motion stereo using a monocular camera. See, for example, JP-A-2004-198211.

The first known technique that performs sensor fusion of the radar and the camera needs aiming adjustment and many parts.

The second known technique does not need work for aiming the radar. However, the second known technique needs the accurate adjustment of the optical axes of right and left lens systems, which increases the manufacturing cost.

The third known technique cannot accurately detect a solid obj ect unless the positional relation between two images formed by motion stereo is accurate, and has difficulty in calculating the distance to an object with respect to the direction of a baseline. Therefore, the third known technique is difficult to use when a vehicle mounted with an on-board camera directed forward runs at a high running speed.

### SUMMARY OF THE INVENTION

Accordingly, it is an object of the present invention to provide an object detecting technique using only a monocular camera and capable of operating at a low calculation cost.

The present invention provides a detector to solve the foregoing problems.

In one aspect, a detector according to the present invention includes: an image pickup unit mounted on a vehicle to acquire an image; and a detecting unit for detecting an object at a predetermined distance from the image pickup unit.

Thus the aspect of the present invention provides the object detecting technique using only the monocular camera and capable of detecting an object at a low calculation cost.

### BRIEF DESCRIPTION OF THE DRAWINGS

The above and other objects, features and advantages of the present invention will become more apparent from the following description taken in connection with the accompanying drawings, in which;
Fig. 1 is a top view of a pedestrian detection range;
Fig. 2 is a picture of s scenery extending ahead of a vehicle taken by a camera;
Fig. 3 is a block diagram of a pre-crush safety system for ensuring the safety of a pedestrian;
Fig. 4 is a block diagram of a pedestrian detecting unit;
Fig. 5 is a top view of a pedestrian detection range; and
Fig. 6 is a top view of a pedestrian detection range.

### DESCRIPTION OF THE PREFERRED EMBODIMENTS

A detector in a first embodiment according to the present invention will be described as applied to detecting a pedestrian.

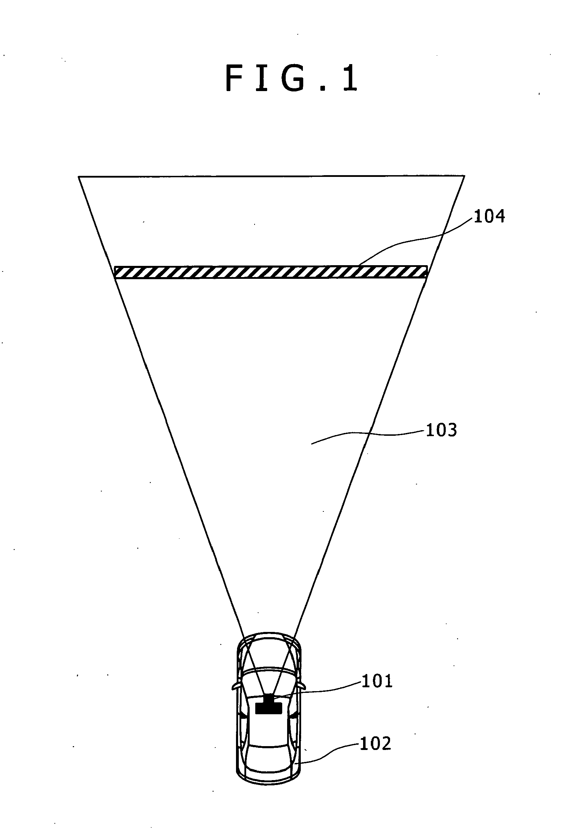

Fig. 1 is a top view of a pedestrian detection range.

Referring to Fig. 1, a camera 101, namely, an image pickup unit, mounted on a vehicle 102 detects only pedestrians in a shaded liner pedestrian detection area 104 at a predetermined distance from the camera 101 in an image pickup range 103. The use of the linear pedestrian detection area 104 instead of a conventionally used two-dimensional pedestrian detection area can limit calculation cost to a low level. The predetermined distance may be a fixed distance of, for example, 30 m or may be selectively determined according to the running speed of the vehicle 102.

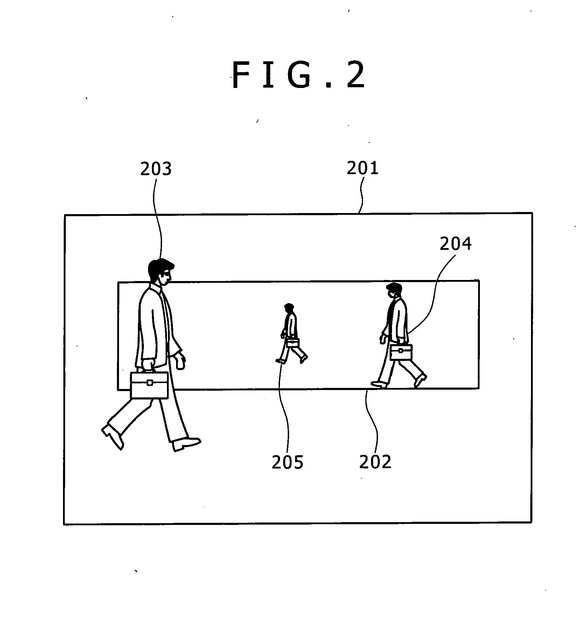

Fig. 2 is a picture of s scenery extending ahead of the vehicle 102 taken by the camera 101.

The pedestrian detection area 104 shown in Fig. 1 corresponds to a pedestrian detection area 202 shown in Fig. 2. In an example shown in Fig. 2, a pedestrian 204 can be detected, but a pedestrian 203 nearer to the camera 101 than the pedestrian 204, and a pedestrian 205 farther from the camera 101 than the pedestrian 204 cannot be detected. A pedestrian detecting procedure is executed periodically at intervals of, for example, every 100 ms. Therefore, the pedestrian detection areas 202(104) move forward as the vehicle 102 advances and, eventually, two-dimensional search is executed. In the case shown in Fig. 2, the remote pedestrian 205 approaches the camera 101 and comes into the linear pedestrian detection area 104 as the vehicle 102 advances.

A pedestrian rushing out into the street to a position at a distance from the camera 101 shorter than the distance between the camera 101 and the pedestrian detection area 202 (104), such as the pedestrian 203, is difficult to detect. Failure in detecting a pedestrian rushing out into the street to such a near position can be prevented by changing the distance between the camera 101 and the pedestrian detection areas 202(104) or by widening the pedestrian detection areas 202(104) based on the running speed of the vehicle 102. For example, when the running speed of the vehicle 102 is lower than a predetermined reference running speed, it is supposed that a pedestrian is liable to come into a zone between the vehicle 102 and the pedestrian detection area 202 (104) and the distance between the pedestrian detection area 202(104) and the camera 101 is shortened. When the vehicle 102 is running at a high running speed higher than the reference running speed, it is supposed that it is possible that the detection of an object is too late for avoiding collision between the vehicle 102 and an object unless the object is detected while the object is at a long distance from the vehicle 102 and that it is hardly possible that a pedestrian comes into a zone between the vehicle 102 and the pedestrian detection area 202(104), and the distance between the camera 101 and the pedestrian detection area 202(104) is increased.

Usually, the moving speed of a pedestrian is far lower than that of an automobile. Therefore, the pedestrian can be detected when the vehicle 102 moves though there is a delay in detecting the pedestrian. Detection of a pedestrian is difficult when the moving speed is higher than that of the vehicle 102. In such a case, there is no collision between the vehicle 102 and the pedestrian unless the pedestrian tries to come into collision with the vehicle 102 and hence any trouble will not occur even if the pedestrian cannot be detected.

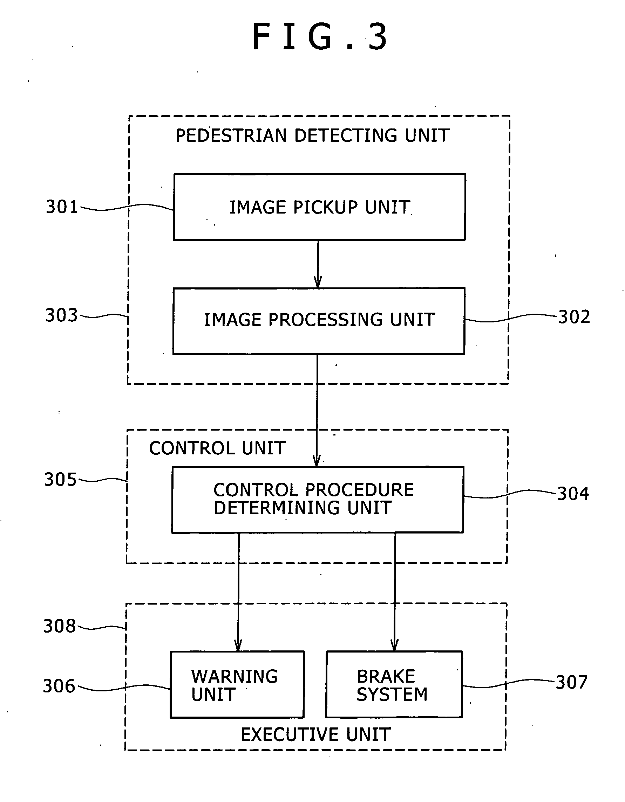

Fig. 3 is a block diagram of a pre-crush safety system for ensuring the safety of a pedestrian.

The pre-crush safety system includes a pedestrian detecting unit 303, a control unit 305 and an executing unit 308. The detector corresponds to the pedestrian detecting unit 303. Usually, the camera 101 corresponds only to an image pickup unit 301. An image processing unit 302 may be a part of in the camera 101.

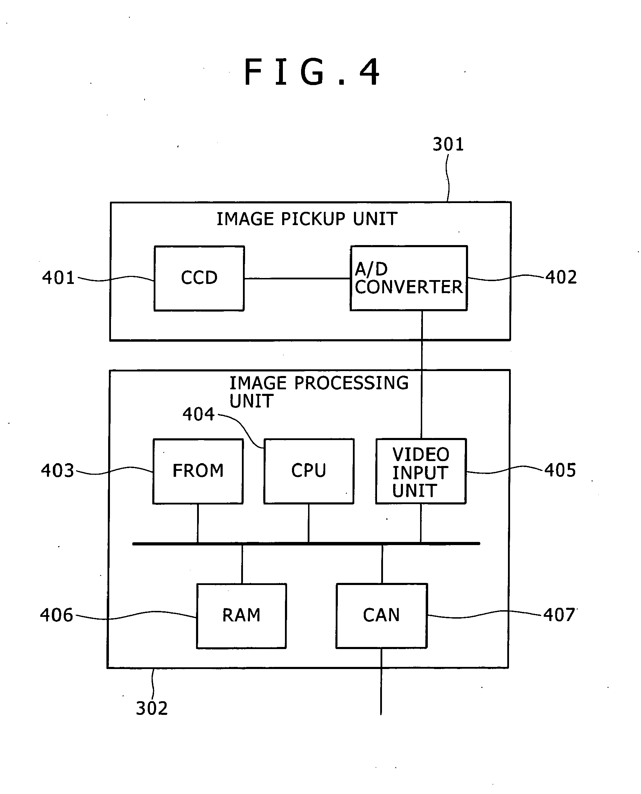

Fig. 4 is a block diagram of the pedestrian detecting unit 303.

The pedestrian detecting unit 303 has the image pickup unit 301 and the image processing unit 302. The image pickup unit 301 has an image pickup device such as CCD 401. The CCD 401 stores charges corresponding to light from a scenery extending ahead of the vehicle 102 and converts image data into digital image data by an A/D converter 402. The digital image data is sent through a video input unit 405 to the image processing unit 302. The digital image data is stored temporarily in a RAM (random-access memory) 406. A pedestrian detection program is stored in a ROM (nonvolatile memory) 403. When the image processing unit 302 is started, a CPU 404 reads the pedestrian detection program out of the ROM 403 and develops the pedestrian detection program in the RAM 406. The CPU 404 executes the pedestrian detection program to determine whether or not any pedestrian is found in the image data of the scenery extending ahead of the vehicle 102 stored in the RAM 406. The result of the determination made by the CPU 404 is transferred through a CAN (control area network) 407 to a control procedure determining unit 304.

The control procedure determining unit 304 of the control unit 305 determines the type of alarm or a braking mode on the basis of the results of determination received through the CAN 407 and gives a signal indicating the result of determination to the executing unit 308.
Finally, a warning unit 306 generates an alarm, and a brake system 307 executes a braking operation.

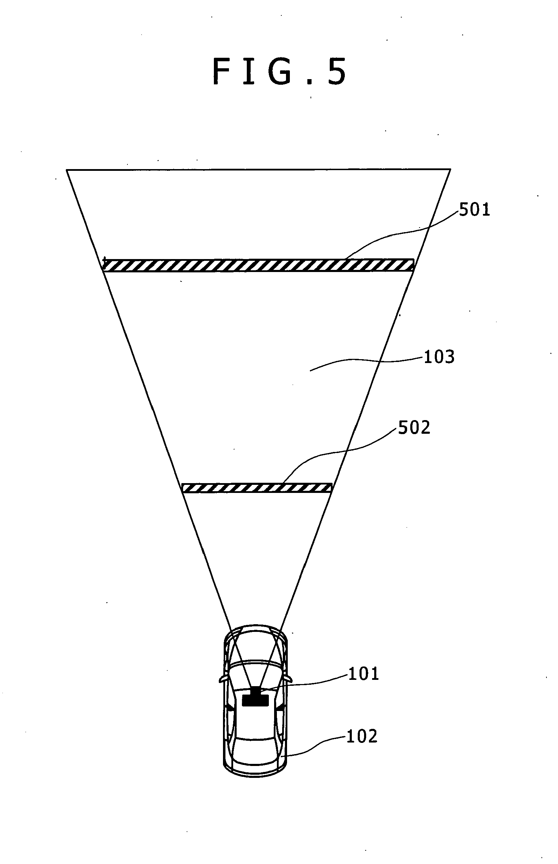

Usually, the pre-crush safety system sounds an alarm when an object, such as a pedestrian, approaches the vehicle 102 and, if collision is unavoidable, the pre-crush safety system controls the brake system to brake the vehicle 101. In most cases, the warning unit 306 and the brake system 307 desire different distances between the vehicle 101 and a pedestrian to be measured, respectively. Two pedestrian detection areas, namely, a pedestrian detection area 501 for the warning unit 306 and a pedestrian detection area 502 for the brake system 307 as shown in Fig. 5 may be used. Naturally, only the pedestrian detection area 104 as shown in Fig. 1 may be used, a warning position may be set and the brake system 307 may be driven by inference. However, it is desirable to reduce faulty operation resulting from faulty detection to the least possible extent when the brake system 307 is controlled for braking. The reliability of the pre-crush safety system can be improved by detecting objects in a double detection mode using the two pedestrian detection areas 501 and 502 as shown in Fig. 5.

There have been proposed many pedestrian detecting methods using a monocular camera. A neural network can be applied to the pattern matching of pedestrians. Pedestrians have different shapes, respectively, and are differently dressed. Therefore, it is difficult to improve performance through matching using a simplified template. A neural network is a mathematical model for expressing some characteristics of a brain function through computer simulation. Most neural networks can obtain satisfactory solutions of data of a multidimensional quantity, such as an image, and a linearly inseparable problem, through computation of a comparatively small computational quantity.

A pedestrian is normalized in a pattern of 20×20 in size, and a three-layer neural network having an input layer of 600 nodes, a hidden layer of 300 nodes and an output layer of 1 node is built. A lot of image data on a pedestrian and objects other than the pedestrian is prepared.
The neural network is taught by an error reverse propagation learning method such that the output layer goes 1 when a pedestrian is detected or goes to 0 when an object other than a pedestrian is detected. The term, "learning" signifies the determination of connection weighting coefficients for the nodes by the error reverse propagation learning method. The determined connection weighting coefficients are used as templates for determining a detected object is a pedestrian. The connection weighting coefficients, namely, the templates, are stored beforehand as parts of the pedestrian detection program in the ROM 403.

In most cases, the size of a pedestrian is magnified or reduced by a scaling process to normalize the size of the pedestrian by the size of the template, namely, a size of 20×30, for pattern matching. When the distance between the camera 101 and the pedestrian detection area 104 (202) is fixed at, for example, 30 m, the size of the template can be originally adjusted to a size at 30 m and normalizing is unnecessary and the calculation cost can be reduced. Image quality is dependent on the magnification or the reduction ratio for scaling. For example, an image 203 of a pedestrian at a short distance from the camera 101 is large and hence the image is reduced at a high reduction ratio, and an image of a pedestrian at a long distance from the camera 101 is reduced at a low reduction ratio. An image of a pedestrian at a long distance from the camera 101 is magnified as the occasion demands. Thus, an image of a pedestrian at a short distance from the camera 101 is liable to be a sharp image having a high spatial frequency after normalization. An image of a pedestrian at a long distance from the camera 101 is liable to be a dull image having a low spatial frequency after normalization. Since the difference in image quality affects the performance of pattern matching, it is desirable that image quality is as constant as possible. From the view point of an internal process for pattern matching, it is desirable to fix the distance between the camera 101 and the p detection area 104 (202), for example, at 30 m. Whether the distance between the camera 101 and the pedestrian detection area 104 (202) is fixed or whether the same is varied according to the running speed needs to be determined depending on an actual application.

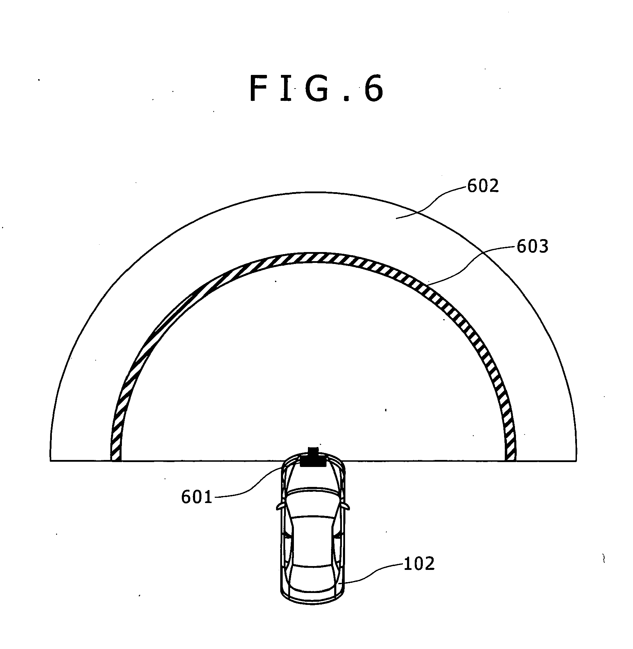

Although the detector in this embodiment has been specifically described as applied to detecting a pedestrian by using the monocular camera directed forward, the detector is applicable to detecting a bicycle, a vehicle moving at a moving speed lower than that of the vehicle equipped with the detector and a stationary vehicle because the detector can detect an object moving at a moving speed lower than that of the vehicle equipped with the detector. Since the detector can detect a moving obj ect even if the vehicle equipped with the detector is stationary, the present invention is applicable to a detector including a camera 601 provided with a fish-eye lens, and disposed at the nose of the vehicle as shown in Fig. 6. The detector equipped with the camera 601 detects an object in a semicircular object detection area 603. In principle, the detector including the camera 603, similarly to the detector equipped with the monocular camera 101, can detect vehicles bicycles and pedestrians approaching the vehicle from the right and the left of the vehicle.

Although the present invention has been described as applied to the detector for detecting a pedestrian, the object to be detected is not limited to a pedestrian.

The foregoing disclosure has been set forth merely to illustrate the invention and is not intended to be limiting. Since modifications of the disclosed embodiments incorporating the spirit and substance of the invention may occur to persons skilled in the art, the invention should be constructed to include everything within the scope of the appended claims and equivalents thereof.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

## Claims

1. A detector comprising:
an image pickup unit mounted on a vehicle (102) to obtain an image of an object; and
a detecting unit for detecting an object in an object detecting area at a predetermined distance from the image pickup unit.

2. The detector according to claim 1, wherein the image pickup unit is a monocular camera (101).

3. The detector according to claim 1 or 2, wherein the predetermined distance is fixed.

4. The detector according to claim 1 or 2, wherein the predetermined distance is varied according to the running speed of the vehicle.

5. The detector according to at least one of claims 1 to 4, wherein the object detecting area has a first area and a second area whose distance from the image pickup unit is different from the first area's one.

6. The detector according to at least one of claims 1 to 5, further comprising:
a warning unit (306) for warning to a driver; and
a braking unit for braking, wherein the first area is for the warning unit (306) and the second area is for the braking unit.
